# EUROPEAN PATENT APPLICATION

(11) **EP 4 549 187 A1**
(43) Date of publication of application: **07.05.2025**
(21) Application number: 23207888.1
(22) Date of filing: 06.11.2023
(51) Int. Cl.: B60J 7/08

(54) **ROLLABLE COVER SYSTEM FOR A CONTAINER**

(71) Applicant: G. J. Holding ApS, 8543 Hornslet (DK)
(72) Inventor: JENSEN, Jakob, 8380 Trige (DK)
(74) Representative: Patrade A/S

(57) **Abstract**

A rollable cover system for temporarily covering an open top area of a container comprising:
- a displaceable shaft defining a longitudinal axis,
- a pivotable arm configured for displacing the displaceable shaft between a first side and a second side,
- a cover attached to the displaceable shaft comprising attachment means configured for being attached to a side,
- a rotary mechanism configured for rotating the displaceable shaft about the longitudinal axis for rolling and unrolling the cover between an open state and a closed state when displacing the displaceable shaft between the first side and the second side,
wherein the width of the cover is greater than the width between the first side and the second side, and the cover comprises two pouches extending substantially parallel to the longitudinal axis, wherein one pouch being closest to the first side and the other pouch being closest to the second side, each pouch being formed by biasing means extending along the cover and the biasing means being configured to create a contracting force substantially perpendicular to the longitudinal axis.

## Description

### Field of the Invention

The present invention relates to a rollable cover system for covering an open top of a transport body.

### Background of the Invention

Covers for transport bodies are well-known in the art. Covers for transport bodies, such as a platform on a lorry, a train car, a trailer, a container, etc. are used for covering an open top of the transport body protecting or retaining the transported goods. It is often desirable to have an automated cover system that is easy to operate and install on the transport body. The cover decreases the wind resistance significantly and reduces spill.

The covers are in many cases equipped with some kind of elastic element as this enables that the container with an open top can be filed such that the material to be transported extend above the open top, see EP 2 505 399 B1. The elastic element may be a pouch extending along the longitudinal direction of the cover, wherein elastic string extends above the pouch for creating a biasing force. The elastic string allows the cover to be tight such that the wind resistance is minimized.

There is an increasing need in the market for covers allowing for a higher top of material. However, it has become apparent that making a larger pouch causes the pouch to be trapped or gripped by the material being filed into the container. The material may be beets or turnips. If the pouch is gripped, then the act of covering the container may in the best case cause an increase wear of the cover or in the worst case cause the cover to tear.

Furthermore, there is a need in the market for a cover system allowing the container to be filed from either of the longitudinal sides. Typically, the cover is rolled to one side by a displaceable arm. See for example EP 2 505 399 B1. Such a system can, in theory, be filed by either side. However, the company or person in charge does not want to be liable for any damages to the cover system thus in practice the filling will only happen in the other side that the rolled-up cover. This problem is greatest for trains and train carts as it is relatively easy and possible in most cases for the truck or lorry to perform change orientation 180 degrees, however this is not viable for a train. Furthermore, in some cases it is required for the train cart to be turned upside down by a rather large clamping device.

### Object of the Invention

The object of the invention is to provide a cover system for temporarily covering an open area of a container, wherein the cover system can support a top extending higher above the open area without increasing wear or increasing risk of tearing.

A further object of the invention is to provide a cover system enabling filling of the container from either longitudinal side of the container while the cover is at the other side or at an intermediate position.

### Description of the Invention

One objective of the invention is achieved by a rollable cover system for temporarily covering an open area of a container.

The rollable cover system comprises a primary displaceable shaft defining a longitudinal axis, a front side, and a rear side arranged opposite each other and at each end of the first displaceable shaft wherein a top area is defined between the front side and rear side, and comprises a first side and a second side substantially parallel to the longitudinal axis.

The rollable cover system comprises a primary pivotable arm configured for displacing the primary displaceable shaft between the first side and the second side and a cover attached to the primary displaceable shaft, the cover comprises attachment means configured for being attached to a side.

The rollable cover system comprises a primary rotary mechanism configured for rotating the primary displaceable shaft about the longitudinal axis for rolling and unrolling the cover when displacing the primary displaceable shaft between the first side and the second side, wherein the rollable cover system has an open state where the top area is exposed, and a closed state where the top area is covered by the cover.

The rollable cover system is adapted so a width of the cover is greater than the width between the first side and the second side, and the cover comprises two pouches extending substantially parallel to the longitudinal axis, wherein one pouch being closest to the first side and the other pouch being closest to the second side, each pouch being formed by biasing means extending along the cover and the biasing means being configured to create a contracting force substantially perpendicular to the longitudinal axis.

The container may be part of a transport body or platform on a lorry, a trailer, a train car for holding e.g., a loaded good or any other loose material.

When positioned in the open position the rollable cover system is rolled up thereby exposing the open top of the container. The container will be able to be loaded or unloaded when in the open position.

When positioned in the closed position the rollable cover system is unrolled thereby covering the open top of the container. The loaded goods in the container are retained and/or protected during transportation when in the closed position.

The primary displaceable shaft may be connected to the primary pivotable arm.

The primary rotary mechanism may be connected to the primary displaceable shaft.

The cover may be attached to a vertical side of the container or the top of a side of the container. The cover may be attached to the side by one or more elastic straps being attached to the side and the cover.

An advantage of providing the cover with at least two pouches is that the cover becomes flexible towards e.g., a heaped load on the transport body and when the cover is unrolled from the displaceable shaft. The cover becomes flexible meaning that the biasing means and the folded pouches may be extended such that an extension of the cover is provided without limited risk of tearing or increase wear due to the two pouches. Thereby accommodating to the additional height of the heaped load and additional stretching of the cover during rolling and un-rolling compared to the prior art, and thus improving the durability of the cover.

A person skilled in the art would know how to choose the optimal width for the cover, the width of the pouches and the width of the biasing means to accommodate the expected maximum heaped load.

In one embodiment of the rollable cover system, a secondary shaft may extend parallel to the longitudinal axis, wherein the cover is attached to the secondary shaft and wherein one pouch is arranged close to the secondary shaft, and the other pouch is close to the first displaceable shaft.

The secondary shaft may be arranged between and in connection with the front side and the rear side of the rollable cover system. The secondary shaft may be a beam, a bar, boom, rail, plank, etc.

The two pouches and biasing means are arranged close to the first side and the second side respectively, so that when the rollable cover system is in the closed state the two pouches are within reach for an average person positioned along either the first side or second side, to service and maintain the pouches.

In some embodiments, the pouches are arranged no more than 0.5 meters from the first side or second side.

An advantage of providing the secondary shaft is that the rollable cover system can be arranged on any given container, as the cover does not need to be attached to a side or a top of a container.

In a further aspect of the rollable cover system, the rollable cover system may be configured such that it can be mounted at a level on the container which will enable opening of the container at the front side or the rear side. Thereby ensuring that goods can be unloaded through the front side or the rear side of the container, or in general ensuring that there is unhindered access to the container.

In one embodiment of the rollable cover system, the rollable cover system may comprise:
- a secondary pivotable arm configured for displacing the secondary shaft between the first side and the second side, thereby the secondary shaft is a secondary displaceable shaft; and
- a secondary rotary mechanism configured for rotating the secondary displaceable shaft about the longitudinal axis for rolling and unrolling the cover when displacing the secondary displaceable shaft between the first side and the second side.

Thereby, the open state can be achieved by at least one of the following shaft positions:
- an intermediate open position wherein the primary and secondary displaceable shafts are displaced together in an intermediate position between the first side and the second side;
- a second side open position, wherein the primary and secondary displaceable shafts are both displaced to the first side;
- a first side open position, wherein the primary and secondary displaceable shafts are both displaced to the second side.

Thus, the cover system enable that the cover can be rolled up to either side or to the intermediate position. The cover system may be able to be in all of the three mentioned open positions. This allows filling form in accordance with the further object of the invention. The two pouches are a requirement for both arms being pivotal as the pouches are positioned close or near respective displaceable shafts since the rolling of one shaft will cause the nearest pouch to be rolled up. Hence, this pouch cannot provide flexibility during the further displacement of the displaceable shaft and the flexibility is in this case provided by the other pouch and vice versa.

The requirement for flexibility of the cover is less of a requirement when displacing the displaceable shaft to an intermediate position as the internal stretching will be less. The intermediate position enables that the container can be gripped by a large gripper which may afterwards tilt or turn the container upside down as is required for some train carts.

The intermediate open position may be above a centre of the container i.e., an equal distance from the first side and the second side or at any other position between the first side and the second side.

The rollable cover system attached to a container of a truck or lorry will enable the truck to be filled from either the first side or the second side by the system being in the open state in form of the second side open position or the first side open position. In some cases, the truck or the lorry will not be able to do a 180-degree turn. This may be the case where a plurality of trucks is in queue to a filling station or where the filling station is at a one-way road such as road at or leading to a motorway.

A person skilled in the art would know how to choose a primary and secondary rotary mechanism that can rotate the primary and secondary displaceable shafts about the longitudinal axis. The primary and secondary rotary mechanism could be a reel arrangement for winding a wire on and off the primary and secondary displaceable shafts thereby causing rotation.

In one aspect of the rollable cover system, the primary and secondary pivotable arm may each be connected to a hydraulic cylinder or electronic actuator or pneumatic cylinder - however, a hydraulic cylinder is preferred. An advantage of this is that the rollable cover system may be automatically operated.

In one aspect of the rollable cover system, the pivotable arm may pivot the displaceable shaft 180 degrees between the first side and the second side.

In one embodiment of the rollable cover system, one or each end of the primary and secondary displaceable shafts is attached to the primary and secondary rotary mechanism and seated in primary and secondary pivotable arms, respectively.

In one embodiment of the rollable cover system, the rollable cover system may be in the closed state when one of the displaceable shafts is displaced to the first side and the other of the displaceable shafts is displaced to the second side.

In one embodiment of the rollable cover system, the biasing means may comprise a plurality of elastic straps arranged substantially perpendicular to the longitudinal axis and across the pouches.

In one aspect of the plurality of elastic straps, the elastic straps may be separately inserted into holes in the cover. The elastic straps may further be arranged substantially perpendicular to the longitudinal axis and substantially parallel to each other.

An advantage of this is that the elastic straps exert equal tension along the pouches thereby minimising local stress and increasing the durability of the cover.

In one aspect of the elastic straps, the plurality of elastic straps may be made of natural rubber. An advantage of this is that natural rubber is the most wear-resistant and elastic choice of material for the elastic straps. The elastic straps may be adjusted so that the contracting force is increased or decreased.

In one embodiment of the rollable cover system, the biasing means may comprise an elastic strap arranged in a zig-zag pattern across each pouch.

The zig-zag pattern is arranged substantially parallel with the longitudinal axis so that a contracting force is achieved substantially perpendicular to the longitudinal axis.

In one aspect of the elastic straps, the two elastic straps may be made of natural rubber. An advantage of this is that natural rubber is the most wear-resistant and elastic choice of material for the elastic straps. The elastic straps may be adjusted so that the contracting force is increased or decreased.

A train car with a rollable cover system according to any of claims 1 to 8.

A truck trailer with a rollable cover system according to any of claims 1 to 8.

### Description of the Drawing

Various examples are described hereinafter with reference to the figures. Corresponding reference numerals refer to corresponding elements throughout. Corresponding elements will thus not be described in detail with respect to the description of each figure. It should also be noted that the figures are only intended to facilitate the description of the examples and thus not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1 illustrates one embodiment of the rollable cover system arranged on a container;
Fig. 2 illustrates one embodiment of the rollable cover system with a secondary shaft;
Fig. 3 illustrates one embodiment of the rollable cover system with two pouches;
Fig. 4 illustrates one embodiment of the rollable cover system with two displaceable shafts; and
Fig. 5 illustrates one embodiment of a pivotable arm and rotary mechanism.

### Detailed Description of the Invention

Exemplary examples will now be described more thoroughly hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises", "comprising", "includes", and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

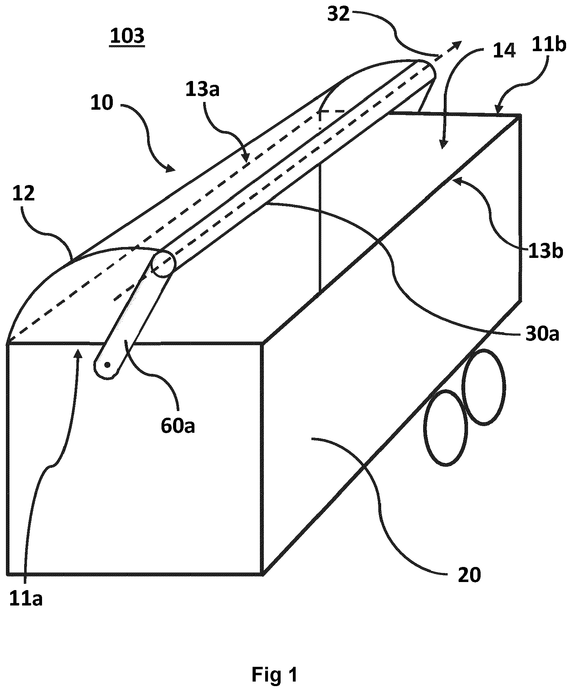

Figure 1 illustrates one embodiment of a rollable cover system 10 with a front side 11a, an opposite rear side 11b, a first side 13a and opposite second side 13b defining a top area 14, arranged on a container 20. The rollable cover system comprises a primary displaceable shaft 30a which is arranged substantially parallel with a longitudinal axis 32 and the first side 13a and second side 13b.

The displaceable shaft 30a is arranged between two primary pivotable arms 60a with a primary rotary mechanism 50a (not shown here) and is configured to be displaced between the first side 13a and the second side 13b. When the displaceable shaft 30a is displaced the primary rotary mechanism 50a rotates the primary displaceable shaft 30a about the longitudinal axis (32).

A cover 12 is attached to the displaceable shaft 30a and a side 13a, 13b of the container 20. The cover 12 is rolled onto and unrolled from the displaceable shaft 30a, when the displaceable shaft 30a is displaced from one side 13a, 13b to the other side 13b,13a. As such, three states of the rollable cover system 10 may be achieved:
- an open state 100 (not illustrated here), where the top area 14 is exposed,
- a closed state 110 (not illustrated here), where the top area 14 is covered by the cover 12, and
- a second intermediate open state 103, where the displaceable shaft 30a is displaced to an intermediate position between the first side 13a and the second side 13b.

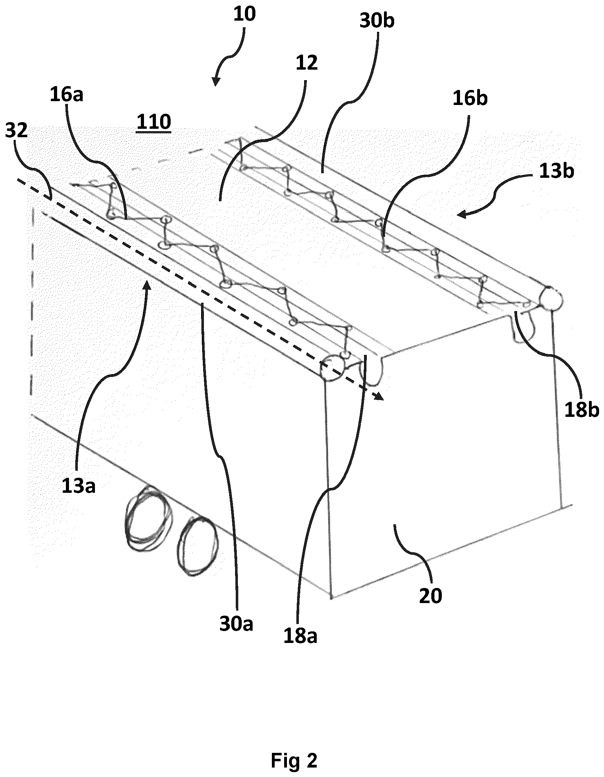

Figure 2 illustrates an embodiment of the rollable cover system 10 wherein the pivotable arms and rotary mechanisms are not shown. The rollable cover system 10 comprises a primary displaceable shaft 30a arranged at the first side 13a and a secondary shaft 30b arranged at the second side 13b. The cover 12 is attached to the primary displaceable shaft 30a in one side and the secondary shaft 30b in the other side. The rollable cover system 10 is in the closed state 110, where the top is covered by the cover 12.

The rollable cover system 10 comprises a cover 12 wherein a width of the cover 12 is greater than the width between the first side 13a and the second side 13b. The cover 12 comprises biasing means 16a,16b each arranged closest to each side 13a,13b, wherein the biasing means 16a, 16b are configured to create a contracting force substantially perpendicular to the longitudinal axis 32. As such two pouches 18a, 18b extending substantially parallel to the longitudinal axis 32 are formed by the biasing means 16a,16b.

The pouches 18a, 18b are expanded when the container 20 is loaded with a heaped load. In such a scenario, the cover 12, which can elastically expand due to the pouches 18a,18b and biasing means 16a,16b, will conform to the heaped load and thus retain all of the load during transport. When the cover 12 conforms to the top area of the container or a heaped load the pouches 18a,18b and biasing means 16a,16b ensures that the cover 12 is maintained in a position which minimises the aerodynamic drag, e.g. by ensuring that the cover does not flutter or distort from wind and air resistance.

As such a further advantageous effect is achieved which is that the wear of the cover is decreased while the durability of the cover is increased.

In this embodiment the biasing means 16a, 16b is an elastic strap arranged in a zig-zag pattern. In another aspect of the biasing means 16a,16b the biasing means 16a,16b may be a plurality of elastic straps arranged substantially parallel to one another and substantially perpendicular to the longitudinal axis 32.

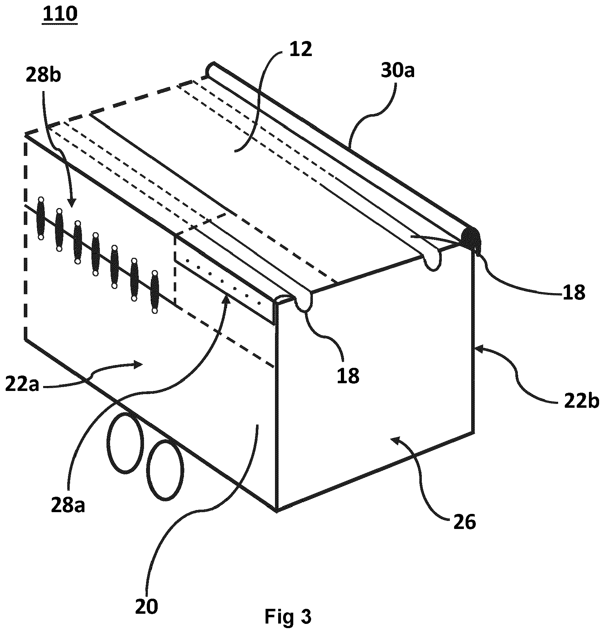

Figure 3 illustrates one embodiment of the rollable cover system 10 arranged on a container 20, wherein the container comprises a first side panel 22a arranged along the longitudinal axis 32 (not illustrated here) and with an opposite second side panel 22b. The two side panels 22a,22b are joined by a rear end 26 of the container.

In this embodiment, the cover 12 may be attached to a side panel 22a,22b of the container 20 by attachment means 28a,28b. In one aspect the attachment means 28a is fastening means such as rivets, in another aspect the attachment means 28b may be a plurality of elastic straps arranged between a side panel 22a,22b and the cover 12, so that the cover can be attached and sufficiently fastened to the side panel 22a,22b.

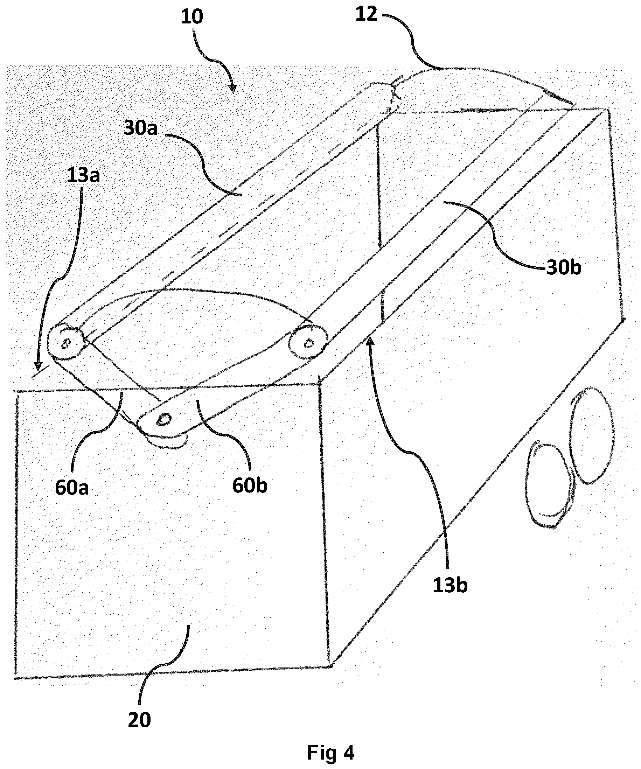

Figure 4 illustrates one embodiment of the rollable cover system 10 arranged on a container 20 and comprising a primary rotatable arm 60a and a secondary rotatable arm 60b each holding a primary displaceable shaft 30a and a secondary displaceable shaft 30b, respectively.

The cover 12 is arranged between the primary displaceable shaft 30a and the secondary displaceable shaft 30b, so that when either or both displaceable shafts 30a,30b are displaced and thus rotated by the primary and secondary rotary mechanisms 50a,50b (not illustrated here) about the longitudinal axis, the cover is rolled and unrolled onto either or both of the displaceable shafts 30a,30b.

The primary and secondary displaceable shafts 30a,30b can both be displaced to the first side 13a and the second side 13b or any intermediate position between the two sides 13a, 13b. Thus, the open state 100 can be achieved by at least one of the following shaft positions:
- an intermediate open position 102 wherein the primary and secondary displaceable shafts 30a,30b are displaced together in an intermediate position between the first side 13a and the second side 13b,
- a second side open position 104, wherein the primary and secondary displaceable shafts 30a,30b are both displaced to the first side 13a,
- a first side open position 106, wherein the primary and secondary displaceable shafts 30a,30b are both displaced to the second side 13b.

Furthermore, the rollable cover system 10 may also be configured in the closed state 110, when one of the displaceable shafts 30a,30b is displaced to the first side 13a and the other of the displaceable shafts 30b,30a is displaced to the second side 13b, so that the cover 12 covers the entire top area 14.

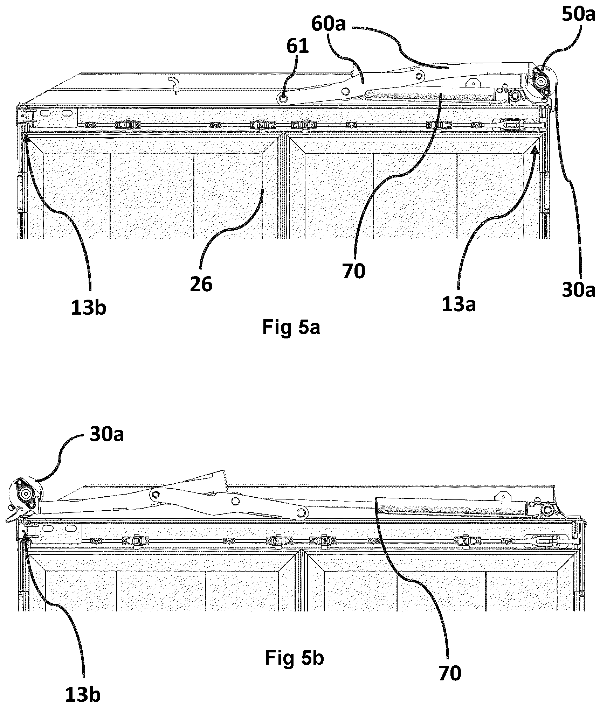

Figure 5a illustrates a rear view of the rollable cover system 10 arranged on a container wherein a rear end 26 of the container 20 is illustrated. The rollable cover system 10 comprises a primary pivotable arm 60a connected to a hydraulic cylinder 70, so that the primary pivotable arm 60a can be pivoted about a pivot axis 61 when the hydraulic cylinder 70 is extended or retracted. In this illustration, the hydraulic cylinder is fully retracted and as such the primary displaceable shaft 30a is arranged at the first side 13a. Depending on the arrangement of the cover 12 (not illustrated here) and/or the secondary displaceable shaft 30b (also not illustrated here), this position of the primary displaceable shaft 30a may be the open state 100 or the closed state 110.

The rollable cover system 10 also comprises a primary rotary mechanism 50a arranged at an end of the primary pivotable arm 60a opposite to the pivot axis 61, the primary rotary mechanism 50a is configured to rotate the primary displaceable shaft 30a when the primary displaceable shaft 30a is displaced by the primary pivotable arm 60a from one side 13a, 13b to the other side 13b, 13a.

Figure 5b illustrates a rollable cover system 10 similar to the rollable cover system illustrated in figure 5a. In this illustration the hydraulic cylinder is fully extracted and as such the primary displaceable shaft 30a is arranged at the second side 13b. Depending on the arrangement of the cover 12 (not illustrated here) and/or the secondary displaceable shaft 30b (also not illustrated here), this position of the primary displaceable shaft 30a may be the open state 100 or the closed state 110.

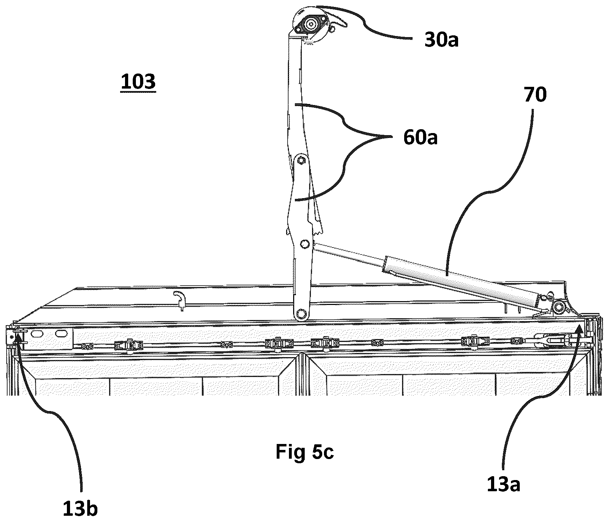

Figure 5c illustrates a rollable cover system 10 similar to the rollable cover system illustrated in figure 5a and 5b. In this illustration the hydraulic cylinder is extended to an intermediate length and as such the primary displaceable shaft 30a is arranged at a second intermediate position 103 between the first side 13a and the second side 13b.

A similar pivotable arm, rotary mechanism and hydraulic cylinder as illustrated in figure 5a, 5b and 5c be provided for the secondary displaceable shaft 30b, the secondary pivotable arm 60b and the secondary rotary mechanism 60b.

By displacing both the primary and secondary displaceable shafts 30a,30b to the first side 13a the rollable cover system 10 assumes the open state 100 because the displaceable shafts 30a,30b are in the first side open position 106. Likewise, if the primary and secondary displaceable shafts 30a,30b are displaced to the second side 13b the rollable cover system 10 assumes the open state 100 because the displaceable shafts 30a,30b are in the second side open position 104. By displacing both the primary and secondary displaceable shafts 30a,30b to an intermediate position between the two sides 13a,13b, e.g., above the centre of the top area 14, as illustrated in fig. 5c, the rollable cover system 10 assumes the open state 100 because the displaceable shafts 30a,30b are in an intermediate open position 102.

| **Reference:** | **Reference number:** |
|---|---|
| Rollable cover system | 10 |
| Open state | 100 |
| Intermediate open position | 102 |
| Second intermediate open state | 103 |
| Second side open position | 104 |
| First side open position | 106 |
| Closed state | 110 |
| Front side | 11a |
| Rear side | 11b |
| Cover | 12 |
| First side | 13a |
| Second side | 13b |
| Top area | 14 |
| Biasing means | 16a, 16b |
| Pouches | 18a, 18b |
| Container | 20 |
| First side panel | 22a |
| Second side panel | 22b |
| Rear end | 26 |
| Attachment means | 28a,28b |
| Primary displaceable shaft | 30a |
| Secondary shaft | 30b |
| Longitudinal axis | 32 |
| Primary rotary mechanism | 50a |
| Secondary rotary mechanism | 50b |
| Primary pivotable arm | 60a |
| Secondary pivotable arm | 60b |
| Pivot axis | 61 |
| Hydraulic cylinder | 70 |

## Claims

1. A rollable cover system (10) for temporarily covering an open area of a container (20), the rollable cover system (10) comprising:
- a primary displaceable shaft (30a) defining a longitudinal axis (32),
- a front side (11a) and a rear side (11b) arranged opposite each other and at each end of the first displaceable shaft (30a) wherein a top area (14) is defined between the front side (11a) and rear side (11b), and comprises a first side (13a) and a second side (13b) substantially parallel to the longitudinal axis (32),
- a primary pivotable arm (60a) configured for displacing the primary displaceable shaft (30a) between the first side (13a) and the second side (13b),
- a cover (12) attached to the primary displaceable shaft (30a), the cover (12) comprises attachment means configured for being attached to a side (11a,11b),
- a primary rotary mechanism (50a) configured for rotating the primary displaceable shaft (30a) about the longitudinal axis (32) for rolling and unrolling the cover (12) when displacing the primary displaceable shaft (30a) between the first side (13a) and the second side (13b),
wherein the rollable cover system (10) has
- an open state (100), where the top area (14) is exposed, and
- a closed state (110), where the top area (14) is covered by the cover (12),
wherein the width of the cover (12) is greater than the width between the first side (13a) and the second side (13b), and the cover (12) comprises two pouches (18a, 18b) extending substantially parallel to the longitudinal axis, wherein one pouch (18a, 18b) being closest to the first side (13a) and the other pouch (18b,18a) being closest to the second side (13b), each pouch (18a,18b) being formed by biasing means (16a,16b) extending along the cover (12) and the biasing means (16a,16b) being configured to create a contracting force substantially perpendicular to the longitudinal axis (32).

2. The rollable cover system (10) according to claim 1, wherein a secondary shaft (30b) extends parallel to the longitudinal axis (32), wherein the cover (12) is attached to the secondary shaft (30b), and wherein one pouch (18a,18b) is arranged close to the secondary shaft (30b) and the other pouch (18b, 18a) is close to the first displaceable shaft (30a).

3. The rollable cover system (10) according to claim 2, wherein the rollable cover system (10) comprises:
- a secondary pivotable arm (60b) configured for displacing the secondary shaft (30b) between the first side (13a) and the second side (13b), thereby the secondary shaft (30b) being a secondary displaceable shaft (30b);
- a secondary rotary mechanism (50b) configured for rotating the secondary displaceable shaft (30b) about the longitudinal axis (32) for rolling and un-rolling the cover (12) when displacing the secondary displaceable shaft (30b) between the first side (13a) and the second side (13b),
wherein the open state (100) is achieved by at least one of the following shaft positions:
- an intermediate open position (102) wherein the primary and secondary displaceable shafts (30a,30b) are displaced together in an intermediate position between the first side (13a) and the second side (13b),
- a second side open position (104), wherein the primary and secondary displaceable shafts (30a,30b) are both displaced to the first side (13a),
- a first side open position (106), wherein the primary and secondary displaceable shafts (30a,30b) are both displaced to the second side (13b).

4. The rollable cover system (10) according to any one of the preceding claims, wherein each end of the primary and secondary displaceable shafts (30a,30b) are attached to the primary and secondary rotary mechanism (50a,50b) and seated in primary and secondary pivotable arms (60a,60b), respectively.

5. The rollable cover system (10) according to any one of claims 3 to 4, wherein the rollable cover system (10) being in the closed state (110), when one of the displaceable shafts (30a,30b) is displaced to the first side (13a) and the other of the displaceable shafts (30b,30a) is displaced to the second side (13b).

6. The rollable cover system (10) according to any one of the preceding claims, wherein the biasing means (16a,16b) comprises a plurality of elastic straps arranged perpendicular to the longitudinal axis (32) and across the pouches (18a, 18b).

7. The rollable cover system (10) according to any one of the preceding claims, wherein the biasing means (16a,16b) comprises an elastic strap arranged in a zig-zag pattern across each pouch (18a, 18b).

8. A train car with a rollable cover system according to any of claims 1 to 7.

9. A truck trailer with a rollable cover system according to any of claims 1 to 7.
